Europäisches Patentamt

European Patent Office

Office européen des brevets

(11) Publication number: **0 231 375
B1**

# EUROPEAN PATENT SPECIFICATION

(45) Date of publication of patent specification: **24.01.90**

(21) Application number: **85903696.4**

(22) Date of filing: **19.07.85**

(86) International application number:
**PCT/JP85/00407**

(87) International publication number:
**WO 87/00535 29.01.87 Gazette 87/03**

(51) Int. Cl.⁵: **C 08 F 2/44, C 08 F 2/50, C 08 G 75/04**

(54) **PHOTO-SETTING COMPOSITION.**

(43) Date of publication of application:
**12.08.87 Bulletin 87/33**

(45) Publication of the grant of the patent:
**24.01.90 Bulletin 90/04**

(84) Designated Contracting States:
**DE FR GB**

(56) References cited:
**JP-A-4 933 629**
**JP-A-5 434 389**
**JP-A-5 849 636**
**JP-A-58 182 601**

(73) Proprietor: **SHOWA DENKO K.K.**
**13-9, Shiba Daimon 1-chome**
**Minato-ku, Tokyo 105 (JP)**

(72) Inventor: **MARUYAMA, Satoshi**
**1350, Miyauchi**
**Nakaharu-ku, Kawasaki-shi Kanagawa 211 (JP)**
Inventor: **YOKOTA, Yoshihisa**
**4-21-31, Utsukushigaoka**
**Midori-ku, Yokohama-shi Kanagawa 227 (JP)**
Inventor: **GOTO, Masataka**
**1-21-22, Aobadai**
**Midor-ku, Yokohama-shi Kanagawa 227 (JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86 (DE)**

Courier Press, Leamington Spa, England.

## Description

Technical Field

The present invention relates to an article which is a photo-cured product of a composition comprising a polymerizable monomer and/or oligomer and, incorporated therein, an ultraviolet absorber and a photopolymerization initiator. The invention also relates to a process for the preparation of an article which is a photo-cured product, wherein a photo-curable composition comprising a polymerizable monomer and/or oligomer and, incorporated therein, an ultraviolet absorber and a photo-polymerization initiator is irradiated and cured with ultraviolet rays.

Background Art

The said composition comprising a polymerizable monomer and/or oligomer, an ultraviolet absorber and a photo-polymerization initiator is known from US—A—3 854 950; Pat. Abs. Japan, Vol. 8, No. 27 (4 February 1984), 58—182 601 or Pat. Abs., Japan, Vol. 3, No. 59 (19 May 1979), 54—34 389. Such compositions are being incorporated in window glasses, lighting material and spectacle lenses, from the viewpoint of skin or eye safety or the prevention of discoloration of a stored article, wherein an ultraviolet absorber is used, having a large absorption spectrum in the ultraviolet region, and is incorporated to prevent the transmission of ultraviolet rays.

When a polymer is shaped into a desired shape by injection molding or inflation for the incorporation of the ultraviolet absorber, a method has been adopted in which the ultraviolet absorber is incorporated in the polymer before the shaping. When a monomer such as monomeric methyl methacrylate is thermally polymerized to a desired shape, a method has been adopted in which the ultraviolet absorber is dissolved in the monomer in advance.

However, disadvantages often arise when a photo-curable composition formed by incorporating an ultraviolet absorber into a monomer is photo-polymerized. More specifically, since the extinction coefficient of the ultraviolet absorber or photo-polymerization initiator to be incorporated is not taken into consideration in the conventional photo-polymerizable composition, when the photo-curable composition is irradiated with ultraviolet rays for the polymerization, the ultraviolet absorber contained in the composition absorbs ultraviolet rays and, hence, a light quantity sufficient to decompose the photo-polymerization initiator and produce radicals cannot be obtained and the rate of polymerization is reduced. Furthermore, when the production of a thick cured product, for example, a cured product having a thickness of more than 2 mm, is intended, only the surface portion is cured and curing is insufficient in the interior portion.

In view of the foregoing defects of the conventional techniques, it is an object of the present invention to provide an article which is a product which can be cured uniformly even in the interior thereof to form a colorless, transparent and thick cured product which does not transmit ultraviolet rays, as well as a process for the preparation of such a cured product.

Disclosure of the Invention

In accordance with one aspect of the invention the article has a thickness of more than 2 mm; and said composition comprises (1) 0,01 to 1% by weight, based on the total amount of the polymerizable monomer and/or oligomer, of an ultraviolet absorber having an extinction coefficient of at least 2000/M·cm at 300 to 350 nm and an extinction coefficient smaller than 1000/M·cm at 360 nm and (2) 0,01 to 2% by weight, based on the total amount of the polymerizable monomer and/or oligomer, of a photopolymerization initiator having an extinction coefficient of at least 50/M·cm at 360 to 380 nm and an extinction coefficient smaller than 10/M·cm at 390 nm.

In accordance with another aspect of the present invention, there is provided a process for the preparation of such an article as defined above, wherein said article has a thickness of more than 2 mm; said photo-curable composition comprises (1) 0,01 to 1% by weight based on the total amount of the polymerizable monomer and/or oligomer, of an ultraviolet absorber having an extinction coefficient of at least 2000/M·cm at 300 to 350 nm and an extinction coefficient smaller than 1000/M·cm at 360 nm and (2) 0,01 to 2% by weight, based of the total amount of the polymerizable monomer and/or oligomer of a photopolymerization initiator having an extinction coefficient of at least 50/M·cm at 360 to 380 nm and an extinction coefficient smaller than 10/M·cm at 390 nm; and the irradiation with ultraviolet rays is carried out by using a light source having an emission band at 360 to 380 nm.

According to the process of the present invention, an ultraviolet ray-impermeable thick cured product which is uniformly cured even to the interior thereof, for example, an ultraviolet ray-impermeable cured product having a thickness of more than 2 mm, can be easily prepared, although a uniformly cured product having such a thickness hardly can be obtained according to the conventional techniques.

Best Mode for Carrying Out the Invention

By the term "extinction coefficient" used in the present invention is meant the value ε calculated from the intensity (Io) of light before transmission through a solution of the ultraviolet absorber and photo-polymerization initiator in ethanol, the intensity (I) of light after transmission through the solution, the solution concentration C (M, mole/l), and the length l (cm) of the optical path of the measurement cell according to the following equation:

$$\log(\mathrm{Io}/\mathrm{I}) = \varepsilon \cdot \mathrm{C} \cdot \mathrm{l}$$

The reasons why an ultraviolet absorber having a specific extinction coefficient and a photopolymerization initiator having a specific extinction coefficient are used in the present invention will now be described.

When an ultraviolet absorber or photopolymerization initiator having an extinction coefficient outside the scope of the present invention is used, it is difficult to prepare a colorless, transparent and thick cured product which is uniformly cured even to the interior thereof and does not transmit ultraviolet rays.

The ultraviolet absorber used in the present invention has an extinction coefficient at 300 to 350 nm of at least 2000/M·cm and an extinction coefficient at 360 nm of smaller than 1000/M·cm. When an ultraviolet absorber having an extinction coefficient smaller than 2000/M·cm at 300 to 350 nm is used, the obtained cured product does not having a sufficient ultraviolet ray-intercepting property. When an ultraviolet absorber having an extinction coefficient exceeding 1000/M·cm at 360 nm is used, the rate of the ultraviolet ray polymerization is drastically reduced and only the surface portion is cured while curing is insufficient in the interior thereof.

As the ultraviolet absorber having the above-mentioned extinction coefficient, there can be mentioned, for example, 2,4-dihydroxybenzophenone, 2-hydroxy-4-octadecyloxybenzophenone, 2-hydroxy-4-methoxybenzophenone-5-sulfonic acid, 2-hydroxy-4-methoxybenzophenone and 2'-ethylhexyl-2-cyano-3-phenyl cinnamate. A mixture of two or more of these ultraviolet absorbers may be used.

The amount of the ultraviolet absorber incorporated is 0,01 to 1% by weight, preferably 0,02 to 0,5% by weight, based on the total amount of the polymerizable monomer and/or oligomer. If the amount of the ultraviolet absorber incorporated is smaller than 0,01% by weight, a substantial ultraviolet ray-absorbing effect can not be attained. If the amount of the ultraviolet absorber incorporated is larger than 1% by weight, the polymerization is extremely retarded, and the obtained cured product becomes opaque and a completely cured product cannot be obtained.

The photo-polymerization initiator used in the present invention has an extinction coefficient at 360 to 380 nm of at least 50/M·cm and an extinction coefficient at 390 nm of smaller than 10/M·cm. If a photo-polymerization initiator having an extinction coefficient smaller than 50/M·cm at 360 to 380 nm is used, the rate of polymerization is low, and only the surface portion is cured but the interior thereof is hardly cured. If a photo-polymerization initiator having an extinction coefficient larger than 10/M·cm at 390 nm is used, the cured product is colored and a colorless transparent cured product hardly can be obtained.

As the photo-polymerization initiator having the above-mentioned extinction coefficient, there can be mentioned, for example, benzyldimethylketal, benzophenone, 4,4'-bisdimethylaminobenzophenone, 2-carboxymethylbenzophenone, benzoin, benzoin ethyl ether, benzoin isopropyl ether, and benzoin isobutyl ether. A mixture of two or more of these photo-polymerization initiators may be used.

The amount of the photo-polymerization initiator incorporated is 0,01 to 2% by weight, preferably 0,03 to 0,5% by weight, based on the total amount of the polymerizable monomer and/or oligomer. If the amount of the photo-polymerization initiator incorporated is smaller than 0,01% by weight, the rate of polymerization is very low and a completely cured product cannot be obtained. If the amount of the photo-polymerization initiator incorporated is larger than 2% by weight, the obtained cured product is colored.

Any of colorless and easily-polymerizable monomers and oligomers can be used as the polymerizable monomer and/or oligomer in the present invention. Preferably, a monomer and/or oligomer having an extinction coefficient smaller than 10/M·cm at 390 nm is used. Specific examples are as follows.

*(1) Photo-polymerizable Vinyl Monomers*

Vinyl esters are used, for example, vinyl esters of linear saturated fatty acids having 2 to 5 carbon atoms, such as vinyl acetate and vinyl propionate, and vinyl esters of branched saturated fatty acids having 8 to 12 carbon atoms; esters of acrylic acid and methacrylic acid, for example, alkyl esters of acrylic acid and methacrylic acid having 1 to 10 carbon atoms in the alkyl group, such as methyl acrylate, methyl methacrylate, ethyl acrylate, ethyl methacrylate, propyl acrylate, propyl methacrylate, butyl acrylate, butyl methacrylate, hexyl acrylate and hexyl methacrylate, esters of acrylic acid and methacrylic acid having an epoxy group in the molecule, such as glycidyl acrylate and glycidyl methacrylate, and esters of acrylic acid and methacrylic acid with linear or branched alcohols having 2 to 16 carbon atoms, such as diethylene glycol diacrylate, diethylene glycol dimethacrylate, trimethylolpropane triacrylate, trimethylolpropane trimethacrylate, pentaerythritol tetra-acrylate, pentaerythritol tetramethacrylate, dipentaerythritol hexa-acrylate, and dipentaerythritol hexamethacrylate; aromatic vinyl hydrocarbons such as styrene, alkylstyrenes, and divinylbenzene; chlorine-containing vinyl compounds such as chlorostyrene and esters of chloroacrylic acid; fluorine-containing vinyl compounds such as fluorostyrene, fluoroalkyl esters of acrylic acid, and fluoroalkyl esters of methacrylic acid; and mixtures thereof.

*(2) Monomers Capable of Photo-addition Reaction*

A combination of an unsaturated compound forming a polymer by photo-addition reaction and a mercaptan is meant. As the unsaturated compound, there can be mentioned the above-mentioned vinyl monomers; polyvalent allyl compounds such as diallyl phthalate and triallyl isocyanurate; and compounds having at least 2 cycloacetal groups in the molecule, such a diallylidene pentaerythritol. As the mercaptan, there are used polyvalent thiols such as trimethylolpropane trithiopropionate, pentaerythritol tetrathioglycolate, and dipentaerythritol hexathioglycolate. The mixing ratio of the unsaturated compound to the mercaptan is in the range of from 3/7 to 7/3, preferably from 4/6 to 6/4, as the equivalent ratio.

*(3) Oligomers*

A photo-curable oligomer having a molecular weight of 200 to 3000 can be used. As typical instances, there can be mentioned epoxy acrylate, epoxy methacrylate, polyester acrylate, polyester methacrylate, polyether acrylate, polyether methacrylate, urethane acrylate, urethane methacrylate, silicone acrylate, and silicone methacrylate.

Among these monomers and oligomers, the monomer (2) capable of photo-addition reaction is preferred, and a mixture comprising (A) a compound having at least 2 acetal groups in the molecule, (B) a polyvalent thiol, and (C) an acrylic acid ester or methacrylic acid ester is especially preferred because the mixture gives a cured product having an excellent transparency or hardness. The mixing ratio of (A)/(B)/(C) is preferably 1/(0.7 to 1.2)/(0.5 to 3) as the equivalent ratio.

A mixture of the compounds (1), (2) and (3) may be used. In this case, the mixing ratio is optional.

The photo-curable composition is prepared by incorporating the ultraviolet absorber having the above-mentioned extinction coefficient and the photo-polymerization initiator having the above-mentioned specific extinction coefficient into the polymerizable monomer and/or oligomer and homogeneously mixing the composition.

The thus-obtained curable composition is cured under irradiation with ultraviolet rays to form a thick cured product which does not substantially transmit ultraviolet rays having a wavelength less than 350 nm and which is colorless and transparent to the naked eye. By the term "cured product" used in the present invention is meant broadly a thick cured film formed on the surface of a substrate or a cast product. Namely, the present invention includes a method in which a cured film having a thickness of more than 2 mm is formed on the surface of a substrate and a method in which a cast product having a thickness of more than 2 mm is formed. The process of the present invention is especially effective for the production of a cast product having a thickness of more than 2 mm.

For the production of a cast product from the photo-curable composition, a method may be adopted in which the photo-curable composition is cast into a transparent casting mold having an optional shape in a thickness of more than 2 mm, the cast composition is cured under irradiation with ultraviolet rays, and the cured product is separated from the mold and recovered. Furthermore, for the formation of a cured film on the surface of a substrate, a method may be adopted in which the photo-curable composition is coated on the substrate by a roller coating, spray coating or brush coating method or the substrate is impregnated with the photo-curing composition and the substrate is squeezed by a roller to attain a desired pick-up amount, and the substrate is irradiated with ultraviolet rays to cure the composition. According to this method, a transparent thick cured film can be formed on the surface of the substrate.

In the above-mentioned process, an ultraviolet lamp or the like having an emission band at 360 to 380 nm is used as the light source for curing the photo-curable composition. As the ultraviolet lamp, there can be mentioned, for example, a metal halide lamp. The irradiation time differs according to the kind of the lamp and the distance between the lamp and the photo-curable composition, but in general, the irradiation time is 1 second to 10 minutes.

When a light source having no substantial emission band at 360 to 380 nm is used, curing of the photo-curable composition is hardly caused. For example, when an incandescent lamp having an emission band at 400 to 660 nm is used as the light source, even if irradiation is conducted for a long time such as 30 minutes, the photo-curable composition is hardly cured.

For curing the photo-curable composition, one surface or both surfaces of the photo-curable composition may be irradiated, but it is preferred that ultraviolet rays be applied to both surfaces from the light source.

When curing is carried out under the above-mentioned conditions, the photo-curable composition can be uniformly cured even to the interior and the cured product is colorless and transparent to the naked eye, and the transmittance of a flat plate having a thickness of 2 mm, as measured at a wavelength of 550 nm, is generally about 88 to about 93%, though the transmittance depends more or less on the refractive index of the photo-curable composition. In contrast, when an ultraviolet absorber or photo-polymerization initiator outside the scope of the present invention is used, the rate of curing is extremely low or the composition is not sufficiently cured to the interior thereof, or the cured product is colored.

Additives such as a levelling agent and a coupling agent may be added to the photo-curable composition of the present invention, so far as the object of the present invention is attained.

The present invention will now be described in detail with reference to the following examples.

Example 1

In a mixture comprising 90 g of methyl methacrylate and 10 g of polyethylene glycol diacrylate (molecular weight = 350) was dissolved 0,1 g of 2-hydroxy-4-methoxybenzophenone (extinction coefficient = 10000/M·cm at 324 nm and 500/M·cm at 360 nm) as the ultraviolet absorber. Then, 0,05 g of benzoin ethyl ether (extinction coefficient = 100/M·cm at 360 nm and 0/M·cm at 390 nm) as the photo-polymerization initiator was dissolved in the solution to form a photo-curable composition. The composition was sufficiently deaerated and cast in a mold having a length of 500 mm, a width of 500 mm, and a thickness of 3 mm, and the cast composition was irradiated with ultraviolet rays from above (only upper surface) by a metal halide lamp having an emission band at 360 to 380 nm. The output of the metal halide lamp was 80 W/cm and the mold was placed at a point 15 cm away from the light source. The composition was completely cured when the irradiation was conducted for 30 minutes. The obtained cured flat plate having a size of about 3 mm × 500 mm × 500 mm was irradiated with ultraviolet rays at 350 nm and the transmittance of ultraviolet rays in the direction of the thickness of 3 mm was measured. It was found that the transmittance was 0,5% and ultraviolet rays were substantially completely intercepted.

The light transmittance of the cured flat plate at 550 nm was 92,3%, and in view of the surface reflection, it was considered that visible rays were sufficiently transmitted. The cured flat plate was colorless and transparent to the naked eye.

The cured flat plate was sliced in the certain thickness, and the Barcol hardness (BH) of the sliced surface was measured. It was found that the Barcol hardness of the surface layer was 38, the Barcol hardness of the 1 mm-sliced surface was 37, and the Barcol hardness of the 2 mm-sliced surface was 37.

From the foregoing results, it was found that the cured flat plate obtained according to the present invention is uniformly cured even to the interior thereof, the hardness of the surface portion is not substantially different from the hardness of the interior portion, the cured plate is colorless and transparent to the naked eye, and the plate substantially intercepts ultraviolet rays.

### Comparative Example 1

A photo-curable composition was prepared in the same manner as described in Example 1 except that 0,1 g of phenyl salicylate (extinction coefficient = 20/M·cm at 350 nm and about 0/M·cm at 360 nm) was used instead of 2-hydroxy-4-methoxybenzophenone.

The composition was cured under the same conditions as described in Example 1 to form a cured flat plate. The ultraviolet ray transmittance at 350 nm of the obtained cured flat plate was measured in the thickness direction. It was found that the ultraviolet ray transmittance was 80,7% and the ultraviolet ray-intercepting property was insufficient.

If the above-mentioned process was carried out by increasing the amount of phenyl salicylate to 1,0 g, the polymerization was drastically retarded and the composition was not completely cured. The ultraviolet ray transmittance at 350 nm of the cured flat plate was 12,6% and the ultraviolet ray-intercepting property was still insufficient.

### Comparative Example 2

A photo-curable composition was prepared in the same manner as described in Example 1 except that 0,05 g of 2,4-diethylthioxanthone (extinction coefficient = 4000/M·cm at 360 nm and 6800/M·cm at 390 nm) was used instead of benzoin ethyl ether. The composition was cured under the same conditions as described in Example 1 to form a cured flat plate.

The obtained cured flat plate was colored yellow, and the light transmittance at 550 nm in the thickness direction was 62,6%, and the object of the present invention, that is, the production of a colorless, transparent cured product, could not be attained.

### Comparative Example 3

A photo-curable composition was prepared in the same manner as described in Example 1 except that 0,05 g of 2-hydroxy-2-methyl-1-phenylpropan-1-one (extinction coefficient = 21/M·cm at 360 nm and about 0/M·cm at 390 nm) was used instead of benzoin ethyl ether. The composition was cured under the same conditions as described in Example 1 to form a cured flat plate.

The Barcol hardness of the surface of the obtained cured flat plate was 38, but the Barcol hardness of the face sliced at 1 mm from the surface was 30 and the Barcol hardness of the face sliced at 2 mm from the surface was 14. Thus, it was found that the surface portion had a sufficient hardness but the hardness of the interior portion was insufficient.

In the above-mentioned process, the curing time was prolonged to 10 minutes or the amount of 2-hydroxy-2-methyl-1-phenylpropan-1-one used was increased to 2 g, but the Barcol hardness of the face sliced at 1 mm or 2 mm from the surface was not increased, and the cured flat plate was colored lightly yellow.

### Example 2

In a monomer mixture comprising 100 g of diallylidene pentaerythritol, 100 g of pentaerythritol tetrathioglycolate and 200 g of trimethylolpropane triacrylate was dissolved 0,1 g of 2-hydroxy-4-methoxybenzophenone-5-sulfonic acid (extinction coefficient = 9000/M·cm at 320 nm and 800/M·cm at 360 nm) as the ultraviolet absorber, and 0.05 g of benzyldimethylketal (extinction coefficient = 140/M·cm at 360 nm and 2/M·cm at 390 nm) as the photo-polymerization initiator was dissolved in the solution to form a photo-curable composition. The composition was cast into a glass mold having a thickness of 6 mm, a width of 100 mm, and a length of 100 mm and sufficiently deaerated. Ultraviolet rays were applied to the composition from above and below (both surfaces) by using a metal halide lamp having an emission band at 360 to 380 nm. The output of the metal halide lamp was 120 W/cm. The mold was placed at a point 15 cm away from the light source. The composition was completely cured when the irradiation was conducted for 30 seconds. With respect to the obtained cured flat plate having a size of about 6 mm × 100 mm × 100 mm, the ultraviolet ray transmittance at 350 nm in the direction of the thickness of 6 mm was measured. It was found that the transmittance was 0,1% and ultraviolet rays were substantially intercepted. When the light transmittance at 550 nm of the cured flat plate was measured, it was found that the light transmittance was 92,0%, and in view of the surface reflection, it was confirmed that visible rays were sufficiently transmitted. The cured flat plate was colorless and transparent to the naked eye.

The cured flat plate was sliced in a certain thickness from the surface and the Barcol hardness of the sliced face was measured. It was found that the Barcol thickness of the surface layer was 45, the Barcol hardness of the 2 mm-sliced face was 44 and the Barcol hardness of the 3 mm-sliced face (central portion) was 42.

From the foregoing results, it was found that in the cured flat plate prepared according to the present invention, the hardness of the interior is not substantially different from the hardness of the surface portion, the composition is uniformly cured even to the interior thereof, the cured product is colorless and transparent to the naked eye, and rays of the ultraviolet region are intercepted.

### Comparative Example 4

A photo-curable composition was prepared in the same manner as described in Example 2 except that 0,1 g of (2-hydroxy-5-tert-octylphenyl)-benzotriazole (extinction coefficient = 16000/M·cm at 345 nm and 10000/M·cm at 360 nm) was used instead of 2-hydroxy-4-methoxybenzophenone-5-sulfonic acid. The composition was cured under the same conditions as described in Example 2 to form a cured flat plate.

The Barcol hardness of the surface portion of the obtained cured flat plate was 45, and the Barcol hardnesses of the 1 mm-sliced face, 2 mm-sliced face, and 3 mm-sliced face were 35, 20, and 13, respectively. It was found that a sufficient hardness was obtained in the surface portion but the hardness was insufficient in the interior portion.

In the above-mentioned process, the curing time was prolonged to 10 minutes or the amount of (2-hydroxy-5-tert-octylphenyl)-benzotriazole used was reduced to 0,01 g. The Barcol hardness of the sliced face in the interior portion of the obtained cured flat plate was not increased.

### Comparative Example 5

A photo-curable composition was prepared in the same manner as described in Example 2 except that 0,05 g of 1-hydroxycyclohexyl phenyl ketone (extinction coefficient = 32/M·cm at 360 nm and 1/M·cm at 390 nm) was used instead of benzyldimethylketal. The composition was cured under the same conditions as described in Example 2 to form a cured flat plate.

The Barcol hardness of the surface portion of the obtained cured flat plate was 44, but the Barcol hardness of the 1 mm-sliced, 2 mm-sliced and 3 mm-sliced faces were 35, 22 and 15, respectively. Thus, it was found that the surface portion had a sufficient hardness but the hardness was insufficient in the interior portion.

In the above-mentioned process, the curing time was prolonged to 10 minutes or the amount of 1-hydroxycyclohexyl phenyl ketone used was increased to 2 g. The Barcol hardness of the sliced face in the interior portion of the cured flat plate was not increased and the cured flat plate was colored, and a cured flat plate as intended in the present invention could not be obtained.

### Example 3

The same photo-curable composition as described in Example 2 was prepared, and the composition was cast into a spectacle lens-forming glass mold. After bubbles were sufficiently removed, ultraviolet rays were applied to both surfaces of the glass mold from above and below (both surfaces of the cast composition) by using a metal halide lamp having a continuous emission band ranging from 360 nm to 380 nm. The output of the metal halide lamp was 80 W/cm and the glass mold was placed at a point 18 cm away from the light source. The composition was completely cured when the irradiation was conducted for 30 seconds.

The obtained lens was colorless and transpatent to the naked eye, and the Barcol hardnesses of the surface portion and central portion were 45 and 41, respectively, and there was no substantial difference in the hardness. Ultraviolet rays having a wavelength less than 350 nm were completely intercepted.

### Example 4

In 100 g of bisphenol A diglycidyl ether diacrylate (molecular weight = 520 g) was dissolved 0,1 g of 2-hydroxy-4-methoxybenzophenone (extinction coefficient = 10000/M·cm at 324 nm and 500/M·cm at 360 nm) as the ultraviolet absorber, and 0,05 g of benzyldimethylketal (extinction coefficient = 140/M·cm at 360 nm and 2/M·cm at 390 nm) as the photo-polymerization initiator was dissolved in the solution to prepare a photo-curable composition. The composition was cast into a glass mold having a thickness of 6 mm, a width of 100 mm and a length of 100 mm, and sufficiently deaerated. The cast composition was irradiated with ultraviolet rays from above and below (both surfaces) by using a metal halide lamp having an emission band at 360 to 380 nm. The output of the lamp was 30 W/cm and the mold was placed at a position 15 cm away from the light source. The composition was completely cured when the irradiation was conducted for 30 seconds.

With respect to the obtained cured flat plate having a size of about 6 mm × 100 mm × 100 mm, the ultraviolet ray transmittance at 350 nm was measured in the direction of the thickness of 6 mm. The transmittance was 0,1%. Thus, it was confirmed that ultraviolet rays were substantially intercepted. When the light transmittance at 550 nm of the cured flat plate was measured, it was found that the light transmittance was 88,5%. In view of the surface reflection, it was considered that visible rays were sufficiently transmitted. The cured flat plate was colorless and transparent to the naked eye.

The cured flat plate was sliced in a certain thickness and the Barcol hardness of the sliced face was measured. It was found that the Barcol hardness of the surface layer was 48 and the Barcol hardnesses of the 1 mm-sliced face, 2 mm-sliced face, and 3 mm-sliced face (central portion) were 48, 47, and 46, respectively.

From the foregoing results, it was found that in the cured flat plate obtained according to the present invention, the hardness of the interior portion is not substantially different from the hardness of the surface portion, the composition is uniformly cured even to the interior thereof, the cured flat plate is colorless and transparent to the naked eye, and rays of the ultraviolet region are completely intercepted.

### Comparative Example 6

A photo-curable composition was prepared in the same manner as described in Example 4 except that 0,1 g of (2-hydroxy-5-tert-octylphenyl)-benzotriazole (extinction coefficient = 16000/M·cm at 345 nm and 10000/M·cm at 360 nm) was used instead of 2-hydroxy-4-methoxybenzophenone. The photo-curable composition was cured under the same conditions as described in Example 4 to prepare a cured flat plate.

The Barcol hardness of the surface portion of the obtained cured flat plate was 48, but the Barcol hardnesses of the 1 mm-sliced face, 2 mm-sliced face, and 3 mm-sliced face were 40, 30, and 15, respectively. Thus, it was found that a sufficient hardness was obtained in the surface portion but the hardness was insufficient in the interior portion.

In the above-mentioned process, the curing time was prolonged to 10 minutes or the amount of (2-hydroxy-5-tert-octylphenyl)-benzotriazole used was reduced to 0.01 g. The Barcol hardness of the interior sliced face of the obtained cured flat plate, however, was not changed.

### Comparative Example 7

A photo-curable composition was prepared in the same manner as described in Example 4 except that 0,05 g of 2-hydroxy-2-methyl-1-phenylpropan-1-one (extinction coefficient = 21/M·cm at 360 nm and about 0/M·cm at 390 nm) was used instead of benzyldimethylketal. The composition was cured under the same conditions as described in Example 4 to prepare a cured flat plate.

The Barcol hardness of the surface portion of the obtained cured flat plate was 48, but the Barcol hardnesses of the 1 mm-sliced face, 2 mm-sliced face, and 3 mm-sliced face were 38, 23, and 17, respectively. It was thus found that a sufficient hardness was obtained in the surface portion but the hardness was insufficient in the interior portion.

In the above-mentioned process, the curing time was prolonged to 10 minutes or the amount of 2-hydroxy-2-methyl-1-phenylpropan-1-one used was increased to 2 g. The Barcol hardnesses of the 1 mm-sliced face, 2 mm-sliced face, and 3 mm-sliced face were not increased, and the cured flat plate was colored lightly yellow.

### Comparative Example 8

A photo-curable composition having the same recipe as described in Example 2 was cast in the same glass mold as used in Example 2. The mold was placed at a position 15 cm away from an incandescent lamp having a main emission band at 400 to 660 nm. By using this lamp, the cast composition was irradiated with light from above and below (both surfaces). Even if the irradiation was conducted for 30 minutes, curing did not occur.

### Capability of Exploitation in Industry

When the photo-curable composition is irradiated with ultraviolet rays emitted from an ultraviolet lamp having an emission band of 360 to 380 nm, the composition can be uniformly and very easily cured even to the interior thereof, and the obtained cured product is colorless and transparent and does not transmit ultraviolet rays. Accordingly, a cast product of the composition of the present invention can be used as a lighting plate of a window or ceiling, a glass substitute for a vehicle, an optical lens such as a spectacle lens, a camera lens or a condenser lens, a disc plate, or an optical material such as a sealant.

### Claims

1. An article which is a photo-cured product of a composition comprising a polymerizable monomer and/or oligomer and, incorporated therein, an ultraviolet absorber and a photo-polymerization initiator, characterized in that said article has a thickness of more than 2 mm; and said composition comprises (1) 0,01 to 1% by weight, based on the total amount of the polymerizable monomer and/or oligomer, of an ultraviolet absorber having an extinction coefficient of at least 2000/M·cm at 300 to 350 nm and an extinction coefficient smaller than 1000/M·cm at 360 nm and (2) 0,01 to 2% by weight, based on the total amount of the polymerizable monomer and/or oligomer, of a photo-polymerization initiator having an extinction coefficient of at least 50/M·cm at 360 to 380 nm and an extinction coefficient smaller than 10/M·cm at 390 nm.

2. The article as set forth in claim 1, wherein the extinction coefficient at 390 nm of the polymerizable monomer and/or oligomer is smaller than 10/M·cm.

3. The article as set forth in claim 1 or 2 wherein the polymerizable monomer and/or oligomer is selected from the group consisting of (1) at least one vinyl monomer selected from vinyl esters, acrylic acid esters, methacrylic acid esters, aromatic vinyl hydrocarbons, chlorine-containing vinyl compounds, and fluorine-containing vinyl compounds, (2) a combination of at least one monomer selected from vinyl esters, acrylic acid esters, methacrylic acid esters, aromatic vinyl hydrocarbons, chlorine-containing vinyl compounds, fluorine-containing vinyl compounds, polyvalent allyl compounds, and compounds having at least 2 cycloacetal groups in the molecule, with a mercaptan, and (3) at least one oligomer having a molecular weight of 200 to 3000, selected from epoxy acrylate, epoxy methacrylate, polyester acrylate, polyester methacrylate, polyether acrylate, polyether methacrylate, urethane acrylate, urethane methacrylate, silicone acrylate, and silicone methacrylate.

4. The article as set forth in any of claims 1 to 3, wherein the polymerizable monomer is a combination of at least one member selected from vinyl esters, acrylic acid esters, methacrylic acid esters, aromatic vinyl hydrocarbons, chlorine-containing vinyl compounds, fluorine-containing vinyl compounds, polyvalent allyl compounds, and compounds having at least 2 acetal groups in the molecule with a mercaptan, the equivalent ratio of said member to the mercaptan being in the range of from 3/7 to 7/3.

5. The article as set forth in claim 1 or 2, wherein the polymerizable monomer and/or oligomer is a mixture comprising (A) a compound having at least 2 cycloacetal groups in the molecule, (B) a polyvalent thiol, and (C) an acrylic acid ester or methacrylic acid ester.

6. The article as set forth in claim 5, wherein the monomer (A)/monomer (B)/monomer (C) mixing ratio is in the range of 1/(0,7 to 1,2)/(0,5 to 3).

7. The article as set forth in any of claims 1 to 6, wherein the ultraviolet absorber is at least one member selected from the group consisting of 2,4-dihydroxybenzophenone, 2-hydroxy-4-octadecyloxybenzophenone, 2-hydroxy-4-methoxybenzophenone-5-sulfonic acid, 2-hydroxy-4-methoxybenzophenone, and 2'-ethylhexyl-2-cyano-3-phenyl cinnamate.

8. The article as set forth in any of claims 1 to 7, wherein the amount of the ultraviolet absorber is 0,02 to 0,5% by weight based on the total amount of the polymerizable monomer and/or oligomer.

9. The article as set forth in any of claims 1 to 8, wherein the photo-polymerization initiator is at least one member selected from the group consisting of benzyldimethylketal, benzophenone, 4,4'-bisdimethylaminobenzophenone, 2-carboxymethylbenzophenone, benzoin, benzoin ethyl ether, benzoin isopropyl ether, and benzoin isobutyl ether.

10. The article as set forth in any of claims 1 to 9, wherein the amount of the photo-polymerization initiator is 0,03 to 0,5% by weight based on the total amount of the polymerizable monomer and/or oligomer.

11. A process for preparation of an article which is a photo-cured product, wherein a photo-curable composition comprising a polymerizable monomer and/or oligomer and, incorporated therein an ultraviolet absorber and a photo-polymerization initiator is irradiated and cured with ultraviolet rays, characterized in that said article has a thickness of more than 2 mm; said photo-curable composition comprises (1) 0,01 to 1% by weight, based on the total amount of the polymerizable monomer and/or oligomer, of an ultraviolet absorber having an extinction coefficient of at least 2000/M·cm at 300 to 350 nm and an extinction coefficient smaller than 1000/M·cm at 360 nm and (2) 0,01 to 2% by weight, based on the total amount of the polymerizable monomer and/or oligomer of a photopolymerization initiator having an extinction coefficient of at least 50/M·cm at 360 to 380 nm and an extinction coefficient smaller than 10/M·cm at 390 nm; and the irradiation with ultraviolet rays is carried out by using a light source having an emission band at 360 to 380 nm.

12. The process according to claim 11, wherein the extinction coefficient at 390 nm of the polymerizable monomer and/or oligomer is smaller than 10/M·cm.

13. The process according to claim 11 or 12, wherein the polymerizable monomer and/or oligomer is selected from the group consisting of (1) at least one vinyl monomer selected from vinyl esters, acrylic acid esters, methacrylic acid esters, aromatic vinyl hydrocarbons, chlorine-containing vinyl compounds and fluorine-containing vinyl compounds, (2) a combination of at least one monomer selected from vinyl esters, acrylic acid esters, methacrylic acid esters, aromatic vinyl hydrocarbons, chlorine-containing vinyl compounds, fluorine-containing vinyl compounds, polyvalent allyl compounds and compounds having at least 2 cycloacetal groups in the molecule, with a mercaptan, and (3) at least one oligomer having a molecular weight of 200 to 3000, selected from epoxy acrylate, epoxy methacrylate, polyester acrylate, polyester methacrylate, polyether acrylate, polyether methacrylate, urethane acrylate, urethane methacrylate, silicone acrylate, and siliconer methacrylate.

14. The process according to any of claims 11 to 13, wherein the polymerizable monomer is a combination of at least one member selected from vinyl esters, acrylic acid esters, methacrylic acid esters, aromatic vinyl hydrocarbons, chlorine-containing vinyl compounds, fluorine-containing vinyl compounds, polyvalent allyl compounds, and compounds having at least 2 acetal groups in the molecule with a mercaptan, the equivalent ratio of said member to the mercaptan being in the range of from 3/7 to 7/3.

15. The process according to claim 11 or 12, wherein the polymerizable monomer and/or oligomer is a mixture comprising (A) a compound having at least 2 cycloacetal groups in the molecule, (B) a polyvalent thiol, and (C) an acrylic acid ester or methacrylic acid ester.

16. The process according to claim 15, wherein the monomer (A)/monomer (B)/monomer (C) mixing ratio is in the range of 1/(0,7 to 1,2)/(0,5 to 3).

17. The process according to any of claims 11 to 16, wherein the ultraviolet absorber is at least one member selected from the group consisting of 2,4-dihydroxybenzophenone, 2-hydroxy-4-octadecyloxybenzophenone, 2-hydroxy-4-methoxybenzophenone-5-sulfonic acid, 2-hydroxy-4-methoxybenzophenone, and 2'-ethylhexyl-2-cyano-3-phenyl cinnamate.

18. The process according to any of claims 11 to 17, wherein the photo-polymerization initiator is at least one member selected from the group consisting of benzyldimethylketal, benzophenone, 4,4'-bisdimethylaminobenzophenone, 2-carboxymethylbenzophenone, benzoin, benzoin ethyl ether, benzoin isopropyl ether, and benzoin isobutyl ether.

**Patentansprüche**

1. Gegenstand, der ein photogehärtetes Produkt einer Zusammensetzung ist, die ein polymerisierbares Monomer und/oder Oligomer und darin inkorporiert ein Ultraviolett-Absorptionsmittel und einen Photopolymerisations-Initiator umfaßt, dadurch gekennzeichnet, daß der Gegenstand eine Dicke von mehr als 2 mm hat und daß die Zusammensetzung (1) 0,01 bis 1 Gew.-%, bezogen auf die Gesamtmenge des polymerisierbaren Monomers und/oder Oligomers eines Ultraviolett-Absorptionsmittels mit einem Extinktionskoeffizienten von mindestens 2000/M·cm bei 300 bis 350 nm und einem Extinktionskoeffizienten von weniger als 1000/M·cm bei 360 nm und (2) 0,01 bis 2 Gew.-%, bezogen auf die Gesamtmenge an polymerisierbarem Monomer und/oder Oligomer eines Photopolymerisations-Initiators mit einem Extinktionskoeffizienten von mindestens 50/M·cm bei 360 bis 380 nm und einem Extinktionskoeffizienten von weniger als 10/M·cm bei 390 nm umfaßt.

2. Gegenstand nach Anspruch 1, worin der Extinktionskoeffizient des polymerisierbaren Monomers und/oder Oligomers geringer als 10/M·cm bei 390 nm ist.

3. Gegenstand nach Anspruch 1 oder 2, worin das polymerisierbare Monomer und/oder Oligomer ausgewählt ist aus der Gruppe, bestehend aus (1) mindestens einem Vinylmonomeren, ausgewählt aus Vinylestern, Acrylsäureestern, Methacrylsäureestern, aromatischen Vinylkohlenwasserstoffen, Chlor enthaltenden Vinylverbindungen und Fluor enthaltenden Vinylverbindungen, (2) einer Kombination von mindestens einem Monomer, ausgewählt aus Vinylestern, Acrylsäureestern, Methacrylsäureestern, aromatischen Vinylkohlenwasserstoffen, Chlor enthaltenden Vinylverbindungen, Fluor enthaltenden Vinylverbindungen, polyvalenten Allylverbindungen und Verbindungen, die mindestens zwei Cycloacetalgruppen im Molekül aufweisen, mit einem Mercaptan und (3) wenigstens einem Oligomer mit einem Molekulargewicht von 200 bis 3000, ausgewählt aus Epoxyacrylat, Epoxymethacrylat, Polyesteracrylat, Polyestermethacrylat, Polyetheracrylat, Polyethermethacrylat, Urethanacrylat, Urethanmthacrylat, Silikonacrylat und Silikonmethacrylat.

4. Gegenstand nach einem der Ansprüche 1 bis 3, worin das polymerisierbare Monomer eine Kombination mindestens eines Mitgliedes, ausgewählt aus Vinylestern, Acrylsäureestern, Methacrylsäureestern, aromatischen Vinylkohlenwasserstoffen, Chlor enthaltenden Vinylverbindungen, Fluor enthaltenden Vinylverbindungen, polyvalenten Allylverbindungen und Verbindungen mit mindestens zwei Acetalgruppen im Molekül, mit einem Mercaptan ist, wobei das Äquivalentverhältnis des Mitgliedes zu Mercaptan im Bereich von 3:7 bis 7:3 liegt.

5. Gegenstand nach Anspruch 1 oder 2, worin das polymerisierbare Monomer und/oder Oligomer eine Mischung ist, die (A) eine Verbindung mit mindestens zwei Cycloacetalgruppen im Molekül, (B) ein polyvalentes Thiol und (C) einen ACrylsäureester oder Methacrylsäureester umfaßt.

6. Gegenstand nach Anspruch 5, worin das Mischungsverhältnis von Monomer (A)/Monomer (B)/Monomer (C) im Bereich von 1/(0,7 bis 1,2)/(0,5 bis 3) liegt.

7. Gegenstand nach einem der Ansprüche 1 bis 6, worin das Ultraviolett-Absorptionsmittel mindestens ein Mitglied ist, ausgewählt aus der Gruppe, bestehend aus 2,4-Dihydroxybenzophenon, 2-Hydroxy-4-octadecyloxybenzophenon, 2-Hydroxy-4-methoxybenzophenon-5-sulfonsäure, 2-Hydroxy-4-methoxybenzophenon und 2'-Ethylhexyl-2-cyano-3-phenyl-cinnamat.

8. Gegenstand nach einem der Ansprüche 1 bis 7, worin die Menge des Ultraviolett-Absorptionsmittels 0,02 bis 0,5 Gew.-%, bezogen auf die Gesamtmenge an polymerisierbarem Monomer und/oder Oligomer beträgt.

9. Gegenstand nach einem der Ansprüche 1 bis 8, worin der Photopolymerisations-Initiator mindestens ein Mitglied ist, ausgewählt aus der Gruppe, bestehend aus Benzyldimethylketal, Benzophenon, 4,4'-Bis-dimethylaminobenzophenon, 2-Carboxymethylbenzophenon, Benzoin, Benzoinethylether, Benzoinisopropylether und Benzoinisobutylether.

10. Gegenstand nach einem der Ansprüche 1 bis 9, worin die Menge des Photopolymerisations-Initiators 0,03 bis 0,5 Gew.-%, bezogen auf die Gesamtmenge an polymerisierbarem Monomer und/oder Oligomer beträgt.

11. Verfahren zur Herstellung eines Gegenstandes, der ein photogehärtetes Produkt ist, worin die photohärtbare Zusammensetzung, die ein polymerisierbares Monomer und/oder Oligomer und darin inkorporiert ein Ultraviolett-Absorptionsmittel und einen Photopolymerisations-Initiator umfaßt, bestrahlt und mit Ultraviolettstrahlen gehärtet wird, dadurch gekennzeichnet, daß der Gegenstand eine Dicke von mehr als 2 mm hat; die photohärtbare Zusammensetzung (1) 0,01 bis 1 Gew.-%, bezogen auf die Gesamtmenge an polymerisierbarem Monomer und/oder Oligomer eines Ultraviolett-Absorptionsmittels mit einem Extinktionskoeffizienten von mindestens 2000/M·cm bei 300 bis 350 nm und einem Extinktionskoeffizienten, der geringer ist als 1000/M·cm bei 360 nm, und (2) 0,01 bis 2 Gew.-%, bezogen auf die Gesamtmenge an polymerisierbarem Monomer und/oder Oligomer eines Photopolymerisationsinitiators mit einem Extinktionskoeffizienten von mindestens 50/M·cm bei 360 bis 380 nm und einem Extinktionskoeffizienten, der geringer ist als 10/M·cm bei 390 nm, umfaßt; und daß die Bestrahlung mit Ultraviolettstrahlen durchgeführt wird unter Verwendung einer Lichtquelle mit einer Emmissionsbande bei 360 bis 380 nm.

12. Verfahren nach Anspruch 11, worin der Extinktionskoeffizient des polymerisierbaren Monomers und/oder Oligomers bei 390 nm geringer ist als 10/M·cm.

13. Verfahren nach Anspruch 11 oder 12, worin das polymerisierbare Monomer und/oder Oligomer ausgewählt ist aus der Gruppe, bestehend aus (1) mindestens einem Vinylmonomer, ausgewählt aus Vinylestern, Acrylsäureestern, Methacrylsäureestern, aromatischen Vinylkohlenwasserstoffen, Chlor enthaltenden Vinylverbindungen und Fluor enthaltenden Vinylverbindungen, (2) einer Kombination von mindestens einem Monomer, ausgewählt aus Vinylestern, Acrylsäureestern, Methacrylsäureestern, aromatischen Vinylkohlenwasserstoffen, Chlor enthaltenden Vinylverbindungen, Fluor enthaltenden Vinylverbindungen, polyvalenten Allylverbindungen und Verbindungen mit mindestens zwei Cycloacetalgruppen im Molekül, mit einem Mercaptan und (3) mindestens einem Oligomer mit einem Molekulargewicht von 200 bis 3000, ausgewählt aus Epoxyacrylat, Epoxymethacrylat, Polyesteracrylat, Polyestermethacrylat, Polyetheracrylat, Polyethermethacrylat, Urethanacrylat, Urethanmethacrylat, Silikonacrylat und Silikonmethacrylat.

14. Verfahren nach einem der Ansprüche 11 bis 13, worin das polymerisierbare Monomer eine Kombination von mindestens einem Mitglied, ausgewählt aus Vinylestern, Acrylsäureestern, Methacrylsäureestern, aromatischen Vinylkohlenwasserstoffen, Chlor enthaltenden Vinylverbindungen, Fluor enthaltenden Vinylverbindungen, polyvalenten Allylverbindungen und Verbindungen mit mindestens zwei Acetalgruppen im Molekül, mit einem Mercaptan ist, wobei das Äquivalentverhältnis des Mitliedes zu dem Mercaptan im Bereich von 3:7 bis 7:3 liegt.

15. Verfahren nach Anspruch 11 oder 12, worin das polymerisierbare Monomer und/oder Oligomer eine Mischung ist, die (A) eine Verbindung mit mindestens zwei Cycloacetalgruppen im Molekül, (B) ein polyvalentes Thiol und (C) einen Acrylsäureester oder Methcrylsäureester umfaßt.

16. Verfahren nach Anspruch 15, worin das Mischungsverhältnis von Monomer (A)/Monomer (B)/Monomer (C) im Bereich von 1/(0,7 bis 1,2)/(0,5 bis 3) liegt.

17. Verfahren nach einem der Ansprüche 11 bis 16, worin das Ultraviolett-Absorptionsmittel mindestens ein Mitglied, ausgewählt aus der Gruppe, bestehend aus 2,4-Dihydroxybenzophenon, 2-Hydroxy-4-octadecyloxybenzophenon, 2-Hydroxy-4-methoxybenzophenon-5-sulfonsäure, 2-Hydroxy-4-methoxybenzophenon und 2'-Ethylhexyl-2-cyano-3-phenylcinnamat ist.

18. Verfahren nach einem der Ansprüche 11 bis 17, worin der Photopolymerisations-Initiator mindestens ein Mitglied, ausgewählt aus der Gruppe, bestehend aus Benzyldimethylketal, Benzophenon, 4,4'-Bis-dimethylaminobenzophenon, 2-Carboxymethylbenzophenon, Benzoin, Benzoinethylether, Benzoinisopropylether und Benzoinisobutylether ist.

**Revendications**

1. Article qui est un produit photodurci d'une composition comprenant un monomère et/ou un oligomère polymérisable, et un absorbeur d'ultraviolet et un amorceur de photopolymérisation, incorporés à la composition, caractérisé en ce que ledit article présente une épaisseur de plus de 2 mm; et ladite composition comprend (1) 0,01 à 1% en poids, par rapport à la quantité totale de monomère et/ou d'oligomère polymérisable, d'un absorbant d'ultraviolet ayant un coefficient d'extinction d'au moins 2000/M·cm à 300—350 nm, et un coefficient d'extinction inférieur à 1000/M·cm à 360 nm, et (2) 0,01 à 2% en poids, par rapport à la quantité totale de monomère et/ou d'oligomère polymérisable, d'un amorceur de photopolymérisation ayant un coefficient d'extinction d'au moins 50/M·cm à 360—380 nm, et un coefficient d'extinction inférieur à 10/M·cm à 390 nm.

2. Article selon la revendication 1, dans lequel le coefficient d'extinction à 390 nm du monomère et/ou de l'oligomère polymérisable est inférieur à 10/M·cm.

3. Article selon la revendication 1 ou 2, dans lequel le monomère et/ou l'oligomère polymérisable est choisi dans le groupe constitué par (1) au moins un monomère vinylique choisi parmi les esters vinyliques, les esters de l'acide acrylique, les esters de l'acide méthacrylique, les hydrocarbures vinylaromatiques, les composés vinyliques contenant du chlore et les composés vinyliques contenant du fluor, (2) une combinaison d'au moins un monomère choisi parmi les esters vinyliques, les esters de l'acide acrylique, les esters de l'acide méthacrylique, les hydrocarbures vinyl-aromatiques, les composés vinyliques contenant du chlore et le composés vinyliques contenant du fluor, les composés allyliques à valences multiples et les composés ayant au moins 2 groupes cycloacétal dans la molécule, avec un mercaptan, et (3) au moins un oligomère ayant une masse moléculaire de 200 à 3000, choisi parmi l'acrylate d'époxy, le méthacrylate d'époxy, l'acrylate de polyester, le méthacrylate de polyester, l'acrylate de polyéther, le méthacrylate de polyéther, l'acrylate d'uréthane, le méthacrylate d'uréthane, l'acrylate de silicone et le méthacrylate de silicone.

4. Article selon l'une quelconque des revendications 1 à 3, dans lequel le monomère polymérisable est au moins un composé choisi parmi les esters vinyliques, les esters de l'acide acrylique, les esters de l'acide méthacrylique, les hydrocarbures vinyl-aromatiques, les composés vinyliques contenant du chlore et les composés vinyliques contenant du fluor, les composés allyliques à valences multiples et les composés ayant au moins 2 groupes cycloacétal dans la molécule, avec un mercaptan, le rapport équivalent dudit composé au mercaptan étant de l'ordre de 3/7 à 7/3.

5. Article selon la revendication 1 ou 2, dans lequel le monomère et/ou l'oligomère polymérisable est un mélange comprenant (A) un composé ayant au moins 2 groupes cycloacétal dans la molécule, (B) un thiol à valences multiples et (C) un ester de l'acide acrylique ou un ester de l'acide méthacrylique.

6. Article selon la revendication 5, dans lequel le rapport de mélange monomère (A)/ monomère (B)/monomère (C) est dans la gamme de 1/(0,7 à 1,2)/(0,5 à 3).

7. Article selon l'une quelconque des revendications 1 à 6, dans lequel l'absorbant d'ultraviolet est au moins un composé choisi dans le groupe constitué par la 2,4-dihydroxybenzophénone, la 2-hydroxy-4-octadécyloxybenzophénone, l'acide 2-hydroxy-4-méthoxybenzophénone-5-sulfonique, la 2-hydroxy-4-méthoxybenzophénone et le cinnamate de 2'-éthylhexyl-2-cyano-3-phényle.

8. Article selon l'une quelconque des revendications 1 à 7, dans lequel la proportion de l'absorbant d'ultraviolet est de 0,02 à 0,5% en poids, par rapport à la quantité totale de monomère et/ou d'oligomère polymérisable.

9. Article selon l'une quelconque des revendications 1 à 8, dans lequel l'amorceur de photopolymérisation est au moins un composé choisi dans le groupe constitué par le benzyldiméthyltal, la benzophénone, la 4,4'-bisdiméthylaminobenzophénone, la 2-carboxyméthylbenzophénone, la benzoïne, la benzoïne-éthyléther, la benzoïne-isopropyléther et la benzoïne-isobutyléther.

10. Article selon l'une quelconque des revendications 1 à 7, dans lequel la proportion de l'amorceur de photopolymérisation est de 0,03 à 0,5% en poids, par rapport à la quantité totale de monomère et/ou d'oligomère polymérisable.

11. Procédé de préparation d'un article qui est un produit photodurci, dans lequel une composition photodurcissable, comprenant un monomère et/ou un oligomère polymérisable, et un absorbeur d'ultraviolet et un amorceur de photopolymérisation, incorporés à la composition, est irradiée et durcie par des rayons ultraviolets, caractérisé en ce que ledit article présente une épaisseur supérieure à 2 mm; ladite composition photodurcissable comprend (1) 0,01 à 1% en poids, par rapport à la quantité totale de monomère et/ou d'oligomère polymérisable, d'un absorbant d'ultraviolet ayant un coefficient d'extinction d'au moins 2000/M·cm à 300—350 nm, et un coefficient d'extinction inférieur à 1000/M·cm à 360 nm, et (2) 0,01 à 2% en poids, par rapport à la quantité totale de monomère et/ou d'oligomère polymérisable, d'un amorceur de photopolymérisation ayant un coefficient d'extinction d'au moins 50/M·cm à 360—380 nm, et un coefficient d'extinction inférieur à 10/M·cm à 390 nm; et l'irradiation par des rayons ultraviolets est effectuée à l'aide d'une source lumineuse ayant une bande d'émission à 360—380 nm.

12. Procédé selon la revendication 11, dans lequel le coefficient d'extinction à 390 nm du monomère et/ou de l'oligomère polymérisable est inférieur à 10/M·cm.

13. Procédé selon la revendication 11 ou 12, dans lequel le monomère et/ou l'oligomère polymérisable est choisi dans le groupe constitué par (1) au moins un monomère vinylique choisi parmi les esters vinyliques, les esters de l'acide acrylique, les esters de l'acide méthacrylique, les hydrocarbures vinylaromatiques, les composés vinyliques contenant du chlore et les composés vinyliques contenant du fluor, (2) une combinaison d'au moins un monomère choisi parmi les esters vinyliques, les esters de l'acide acrylique, les esters de l'acide méthacrylique, les hydrocarbutes vinyl-aromatiques, les composés vinyliques contenant du chlore et les composés vinyliques contenant du fluor, les composés allyliques à valences multiples et les composés ayant au moins 2 groupes cycloacétal dans la molécule, avec un mercaptan, et (3) au moins un oligomère ayant une masse moléculaire de 200 à 3000, choisi parmi l'acrylate d'époxy, le méthacrylate d'époxy, l'acrylate de polyester, le méthacrylate de polyester, l'acrylate de polyéther, le méthacrylate de polyéther, l'acrylate d'uréthane, le méthacrylate d'uréthane, l'acrylate de silicone et le méthacrylate de silicone.

14. Procédé selon l'une quelconque des revendications 11 à 13, dans lequel le monomère polymérisable est une combinaison d'au moins un composé choisi parmi les esters vinyliques, les esters de l'acide acrylique, les esters de l'acide méthacrylique, les hydrocarbures vinyl-aromatiques, les composés vinyliques contenant du chlore et les composés vinyliques contenant du fluor, les composés allyliques à valences multiples et les composés ayant au moins 2 groupes cycloacétal dans la molécule, avec un mercaptan, le rapport équivalent dudit composé au mercaptan étant de l'ordre de 3/7 à 7/3.

15. Procédé selon la revendication 11 ou 12, dans lequel le monomère et/ou l'oligomère polymérisable est un mélange comprenant (A) un composé ayant au moins 2 groupes cycloacétal dans la molécule, (B) un thiol à valences multiples et (C) un ester de l'acide acrylique ou un ester de l'acide méthacrylique.

16. Procédé selon la revendication 15, dans lequel le rapport de mélange monomère (A)/ monomère (B)/monomère (C) est dans la gamme de 1/(0,7 à 1,2)/(0,5 à 3).

17. Procédé selon l'une quelconque des revendications 1 à 16, dans lequel l'absorbant d'ultraviolet est au moins un composé choisi dans le groupe constitué par la 2,4-dihydroxybenzophénone, la 2-hydroxy-4-octadécyloxybenzophénone, l'acide 2-hydroxy-4-méthoxybenzo-phénone-5-sulfonique, la 2-hydroxy-4-méthoxy-benzophénone et le cinnamate de 2'-éthylhexyl-2-cyano-3-phényle.

18. Procédé selon l'une quelconque des revendications 1 à 17, dans lequel l'amorceur de photopolymérisation est au moins un composé choisi dans le groupe constitué par le benzyl-diméthylcétal, la benzophénone, la 4,4'-bis-diméthylaminobenzophénone, la 2-carboxy-méthylbenzophénone, la benzoïne, la benzoïne-éthyléther, la benzoïne-isopropyléther et la benzoïne-isobutyléther.